# EUROPEAN PATENT SPECIFICATION

(11) **EP 0 718 155 B1**
(45) Date of publication and mention of the grant of the patent: **22.03.2000**
(21) Application number: 95120084.9
(22) Date of filing: 19.12.1995
(51) Int. Cl.: B60R 9/055

(54) **Modular system for transporting luggage on the roof of a motor vehicle**
Modulsystem zum Gepäcktransport auf dem Dach eines Kraftfahrzeuges
Système modulaire pour le transport de bagages sur le toit d'un véhicule automobile

(30) Priority: 22.12.1994 IT TO941060
(43) Date of publication of application: 26.06.1996
(73) Proprietor: FIAT AUTO S.p.A., 10135 Torino (IT)
(72) Inventor: Collinucci, Luigi, I-10137 Torino (IT); Morganti, Mario, I-10124 Torino (IT)
(74) Representative: Quinterno, Giuseppe

(56) References cited:
- DE-A- 3 546 220
- DE-C- 3 937 244
- DE-U- 8 804 776
- DE-U- 9 207 442
- FR-A- 2 445 246
- FR-A- 2 484 221
- FR-A- 2 581 943
- US-A- 4 955 519

## Description

The present invention relates to a system for transporting luggage and the like on the roof of a motor vehicle of the kind defined in the preamble of Claim 1.

DE-U-92 07 442 discloses a system of this kind, comprising a specially devised replacement roof panel insertable in a corresponding aperture provided in the roof of a motor vehicle. The insertable replacement roof panel is shaped so as to define two longitudinal, recessed side channels or guides, and is further provided with a plurality of recessed retaining members. A plurality of suitcase-like contai-' ners can be disposed directly onto the replacement roof panel. Said containers are each provided with retractable fastening hook members, which are rotatable for engagement with corresponding retaining members of the roof panel.

The containers in use rest directly in contact with the upper surface or face of said roof panel and any displacement thereof to and from their anchoring positions may endamage (scratch) the roof surface.

In the embodiment shown in fig.1 of said document, there are provided two front wedge-like containers and two box- like rear containers. The lower or base surface of the front containers is markedly more arcuate and convex than the base surface of the rear containers. Because of this feature, and in view of the disclosed disposition of the retaining members in the roof panel, the prior system does not appear to be adapted to define, for each pair of containers, a plurality of different possible anchoring positions staggered along the longitudinal direction of the roof.

FR-A-2 581 943 discloses a luggage transport or rack system comprising a structure formed by a plurality of transverse load-bearing arches extending at a distance above the roof of the motor vehicle and having their ends fixed to the longitudinal sides of the roof. Two longitudinal side beams are fixed onto said arches. A plurality of T-shaped transverse rails are fixed onto said beams and are adapted to be slidingly engaged by corresponding rails fixed to the lower. or base surface of three suitcase-like containers having a width essentially equal to the width of the vehicle roof.

Due to the distance between said load-bearing arches and the roof, this prior system has a considerable height, so that the overall aerodynamics of the motor vehicle is impaired. Furthermore, the load represented by the weight of the transported luggage is concentrated in a few rather small areas of the roof sides, where the ends of said arches are anchored thereto.

DE-A-39 37 244 discloses a luggage container for mounting above the roof of a motor vehicle, incorporating a safety arrangement capable of generating alarm signals for preventing the theft or unauthorised opening of said container.

The object of the present invention is to provide an improved system for transporting luggage and the like on the roof of a motor vehicle, which system is simple, convenient and reliable to use, and which in the operating state does not appreciably impair the overall aerodynamics of the motor vehicle and thus its performance in terms of fuel consumption and speed, and which is furthermore stylistically integrated in the aesthetic appearance of the motor vehicle as a whole.

These and other objects are achieved in accordance with the invention by a modular transporting system of which the principal characteristics are defined in appended Claim 1.

Particularly advantageous embodiments of the invention are further defined in the subclaims.

Further characteristics and advantages of the invention will appear from the following detailed description, given purely by way of non-limiting example with reference to the appended drawings, in which:
Figure 1 is a perspective view of a motor vehicle provided with a modular transporting system according to the invention;
Figure 2 is a partially exploded perspective view of the motor vehicle and the associated transporting system illustrated in Figure 1;
Figures 2a-2e are perspective views on an enlarged scale of certain details shown in Figure 2;
Figure 3 is a perspective view of a container comprised in the modular transporting system according to Figures 1 and 2;
Figure 3a is a perspective view on an enlarged scale of a detail of the container shown in Figure 3;
Figure 4 is a view in cross-section of the transporting system according to the preceding Figures, in the mounted state in which it is in use;
Figure 5 is a view of a locking device shown in Figure 2, taken along the line V-V of this Figure;
Figure 6 is a view in section similar to that of Figure 5, showing the locking device in a different operating state;
Figures 7 and 8 are side views of a motor vehicle provided with a transporting system according to the invention, in a first and second reduced configuration;
Figure 9 is a view in section of a further locking device shown in Figures 2 and 2e, taken along the line IX-IX of Figure 2e;
Figure 10 is a view in section similar to that of Figure 9, showing the further locking device in a different operating state;
Figure 11 is a perspective view showing the motor vehicle instrument panel comprising an optical signalling device which can be associated with the modular transporting system according to the invention;
Figure 12 is a partially exploded perspective view showing a second embodiment of a modular transporting system according to the invention;
Figures 12a-12c are perspective views on an enlarged scale of certain details shown in Figure 12;
Figure 13 is a perspective view on an enlarged scale of a container comprised in the transporting system according to Figure 12;
Figure 14 is a view in cross-section of the transporting system according to Figure 12, shown in the operating state of use;
Figure 15 is a view in section of a retention and guide devices shown in Figure 12a, taken along the line XV-XV of this Figure;
Figure 16 is a view of a further retention and guide device, shown in Figure 12b, taken along the line XVI-XVI of this Figure;
Figure 17 shows a locking device comprised in the modular transporting system according to Figure 12 and the following Figures, taken along the line XVII-XVII of Figure 12c;
. Figure 18 is a view in section similar to that of Figure 17, showing the locking device in a different operating state;
Figure 19 is a partially exploded perspective view of a third embodiment of a modular transporting system according to the invention;
Figure 20 is a partial perspective view on an enlarged scale of part of the modular transporting system shown in Figure 19;
Figure 20a shows a detail of Figure 20 in a different operating state; and
Figure 21 is a perspective view of a motor vehicle provided with a modular transporting system according to Figures 19 and 20.

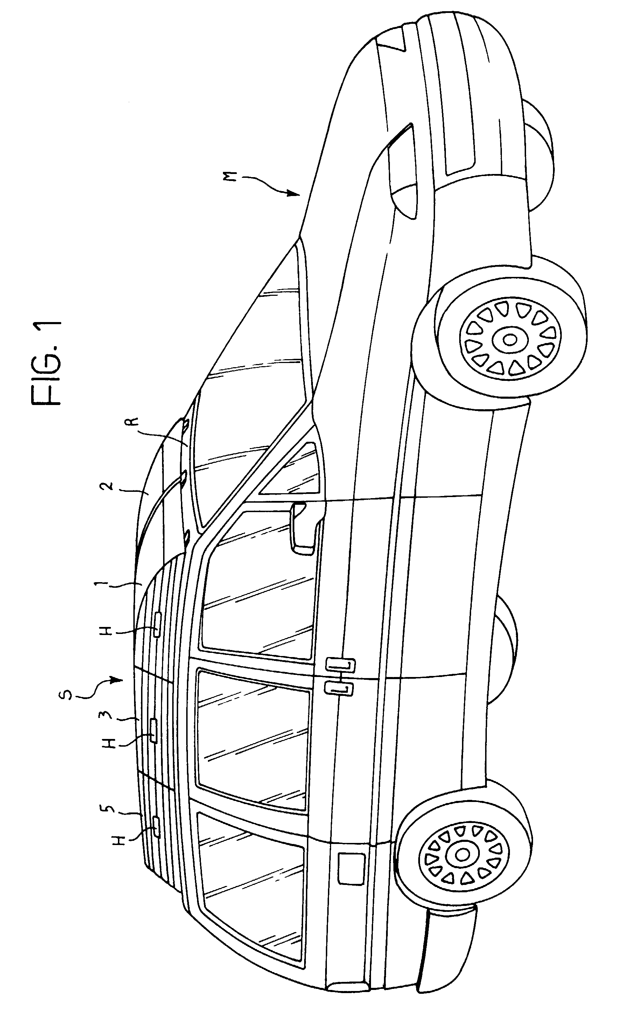

In Figure 1, a motor vehicle is designated M on the roof R of which is mounted a modular system, generally designated S, for transporting luggage and the like.

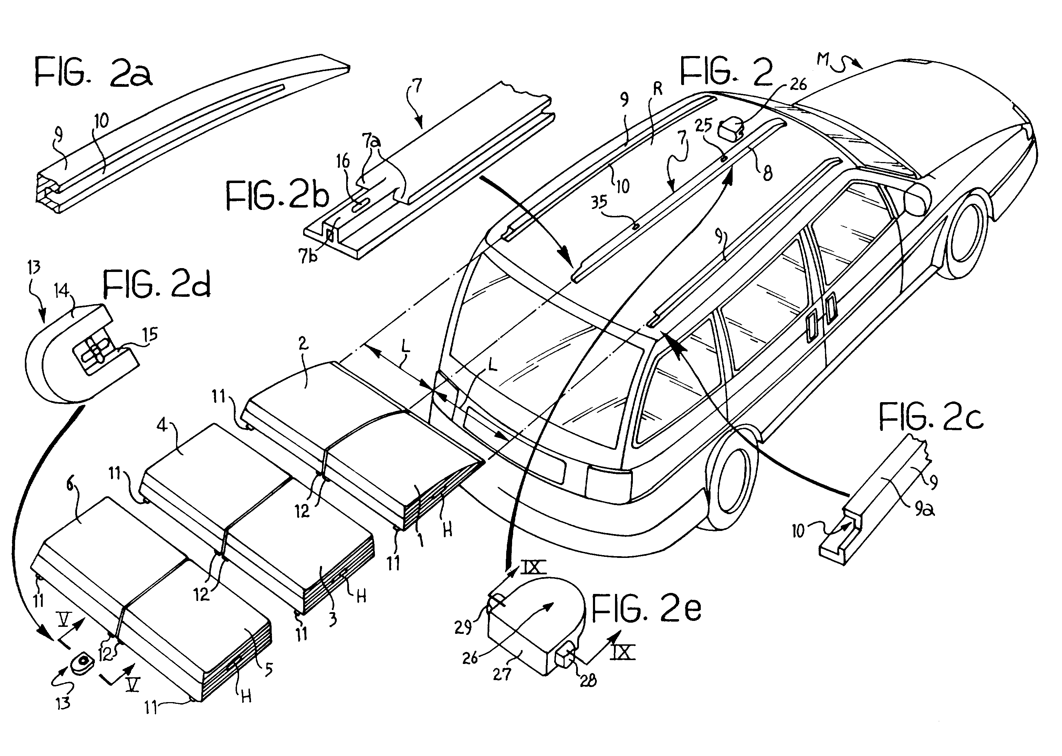

In the configuration illustrated in Figures 1 and 2, this transporting system S comprises three pairs of substantially suitcase-like containers (1, 2), (3, 4) and (5, 6) which are anchored to and are removable from a supporting retention and guide structure secured to the roof R, which will be described in further detail below.

As Figure 2 shows, the containers 1, 3 and 5 have respective shapes which are mirror images of those of the adjacent containers 2, 4 and 6. The widths L (Figure 2) of these containers are substantially less than or equal to half the width of the motor vehicle roof R.

The containers 1 and 2 of the first pair have an aerodynamic profile which is substantially wedge-shaped. The containers of the other two pairs 3, 4 and 5, 6 have shapes which are relatively more squared. The containers 1 to 6 have respective handles H on the respective faces which, in the assembled state of use (Figure 1), are turned towards the body sides of the motor vehicle M.

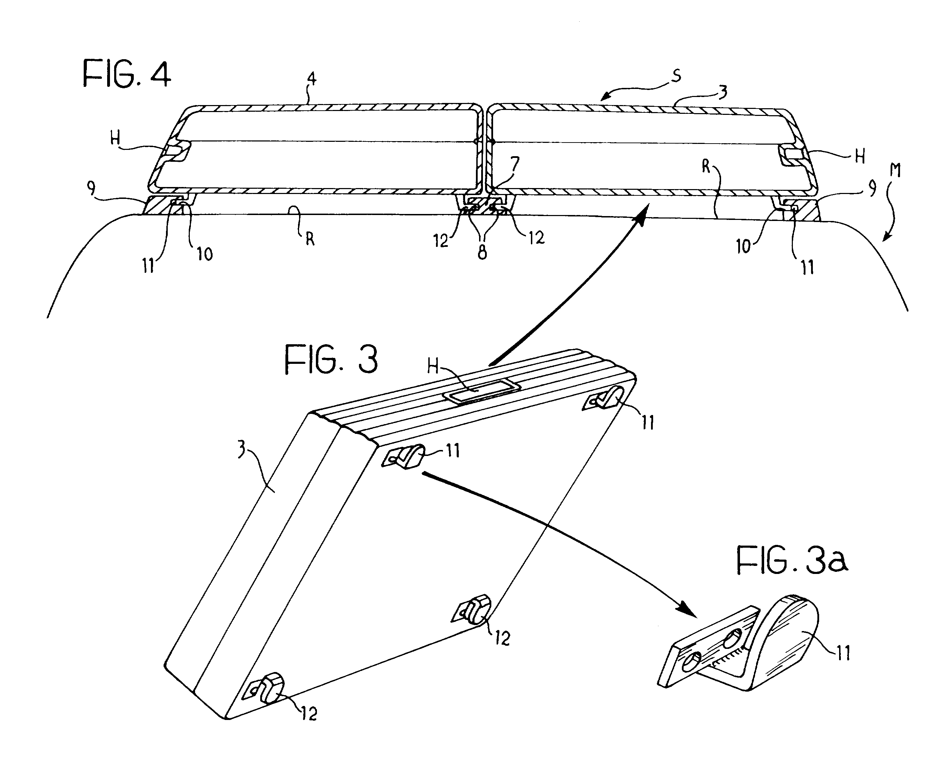

Secured to the motor vehicle roof R is a retention and guide structure substantially comprising a central profiled portion 7 with a substantially H-shaped section, resting on and secured to the motor vehicle roof R in correspondence with one of its parallel legs. At its sides, this profiled portion 7 defines two substantially symmetrical longitudinal guides or channels 8 (see also Figure 4).

The retention and guide structure also comprises two further profiled portions 9 which have substantially C-shaped sections and are disposed symmetrically on opposite sides relative to the central profiled portion 7, along the longitudinal sides of the roof. The respective longitudinal recesses or guides 10 in the profiled portions 9 face the guides 8 defined in the central profiled portion 7.

As Figures 2, 3 and 3a show, two pairs of fins 11 and 12 respectively, which are substantially folded in an L-shape and have their free ends directed towards the exterior, are secured to the faces of the containers 1-6 which are to be turned towards the motor vehicle roof R.

The fins 11 of these containers can be slidingly engaged in the guide grooves 10 of the lateral profiled portions 9 whilst the fins 12 can be slidingly engaged in the guide channels 8 of the central profiled portion 7 (see Figure 4).

In order, in use, to facilitate the fitting of the fins 11, 12 of the containers 1-6 into the guide channels of the above-mentioned profiled portions, the upper flanges 7a, 9a of the rear ends of the profiled portions can be shortened, as shown in Figure 2 and in the details illustrated in Figures 2b and 2c.

Advantageously, although not necessarily, the front ends of the channels or guides 8, 10 of the profiled portions 7 and 9 respectively are transversely closed, as shown for example in Figure 2a, in order to stop the sliding of the fins 11, 12 of the first pair of containers 1, 2 and to define their stop limit position.

The containers 1-6 can be disposed adjacent one another on the motor vehicle roof R by engaging the fins 11 and 12 in the guide channels of the profiled portions 7 and 9.

The containers 3, 4 and 5, 6 advantageously have respective shapes such that, adjacent the containers 1, 2 of the first pair, in the state of use in which they are close to each other (Figure 1), they form an overall volume of aerodynamic shape which is substantially wedge-shaped.

The arcuate wedge-shaped profile of the first pair of containers 1, 2 enables the overall shape of these containers to be harmoniously and aesthetically combined with the general shape of the motor vehicle M.

When they have been fitted into the guides 7, 9 and have been perfectly aligned with one another, the containers 1-6 can be locked by coupling a suitable locking device indicated 13 in Figures 2, 2d, 5 and 6 to the rear end of the central profiled portion 7.

In the embodiment shown by way of example, the locking device 13 comprises a body 14 having on one face a recess 15 which can be coupled to the rear end portion of the central core 7b of the profiled portion 7 (Figures 2b, 5 and 6). This core 7b is, for example, tubular and has an upper slot-like aperture indicated 16 in Figures 2b, 5 and 6.

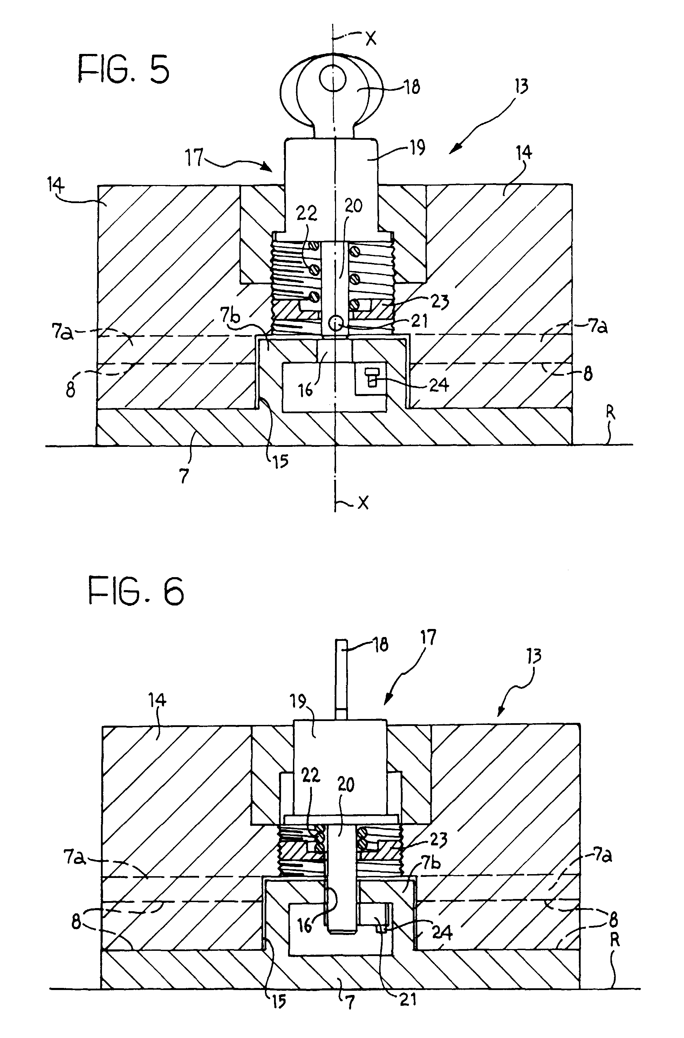

A device with a lock 17, of substantially known type, which can be actuated by means of a key 18 is mounted in the body 14 of the locking device. This device comprises a lock cylinder 19 which can rotate about and be moved along an axis which is indicated X-X in Figure 5 and passes through the slot-like aperture 16 when the locking device 13 is coupled to the profiled portion 7. A rod 20, into the open end of which a pin 21 is driven, is connected to the cylinder 19. Disposed about this rod is a helical spring 22 which, reacting on the one side against a ring 23 secured to the body 14 and on the other against the cylinder 19, tends to oppose the translation of the latter.

In order to lock the containers 1-6 in position on the motor vehicle roof, the locking device 13 is coupled to the end portion of the central profiled portion 7, in the manner illustrated in Figure 5, with the cylinder 19 in the extracted state. Using the key 18, the user can cause the cylinder 19 to move downwards in such a way that the pin 21 of the rod 20 projects beyond the slot-like aperture 16 of the end portion of the core of the profiled portion 7. In this state, the rotation of the key 18 determines the engagement of the pin 21 below the upper wall of the core 7b of the profiled portion 7. In this state, the locking device is firmly retained at the rear end of the central profiled portion 7 and its body 14 prevents the containers 1-6 being removed from the profiled portions 7 to 9.

Advantageously, although not necessarily, a microswitch, such as the one indicated 24 in Figures 5 and 6, which can be actuated by the end of the pin 21 when the latter is in the locking position shown in Figure 6, can be disposed inside the recess in the tubular core 7b of the central profiled portion 7, adjacent the slot-like aperture 16. The microswitch 24 can advantageously be used to generate an electrical signal indicating that the assembly of the containers 1-6 has been locked in position on the motor vehicle roof, it being possible to use this signal, for example, in order to generate a corresponding optical or acoustic signal inside the motor vehicle passenger compartment.

Evidently, other sensor devices can be used for the same purpose instead of a microswitch.

In any case, these microswitches (or other types of sensor) can also be used in conjunction with the anti-theft alarm with which the motor vehicle may be equipped in order to determine the generation of an alarm signal when the luggage-transporting containers are in some manner unlawfully removed from the motor vehicle roof whilst the anti-theft system is activated.

The central profiled portion 7, or the lateral profiled portions 9, can be provided (in a manner not shown) with possible microswitches or other sensors of known type, which can cooperate, for example, with the fins 11 or 12 of the containers 1-6, in order to provide corresponding electrical signals indicating the presence of the containers 1-6 in the respective anchorage positions on the motor vehicle roof. These signals can be used, for example, to determine the generation of an acoustic or optical signal inside the motor vehicle passenger compartment and/or can be used in conjunction with the anti-theft alarm system with which the vehicle may be equipped.

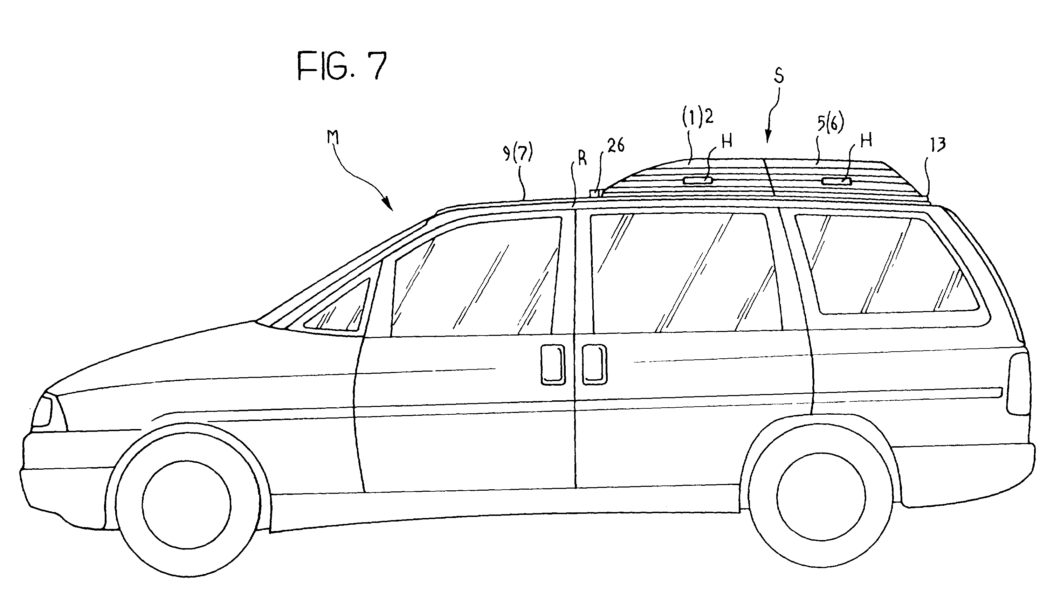

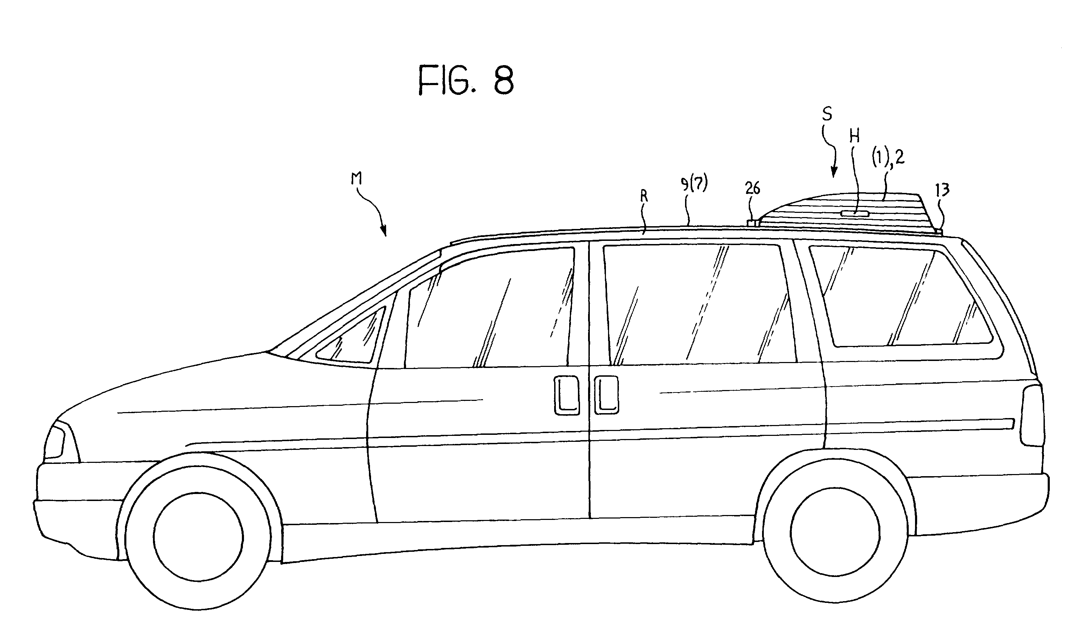

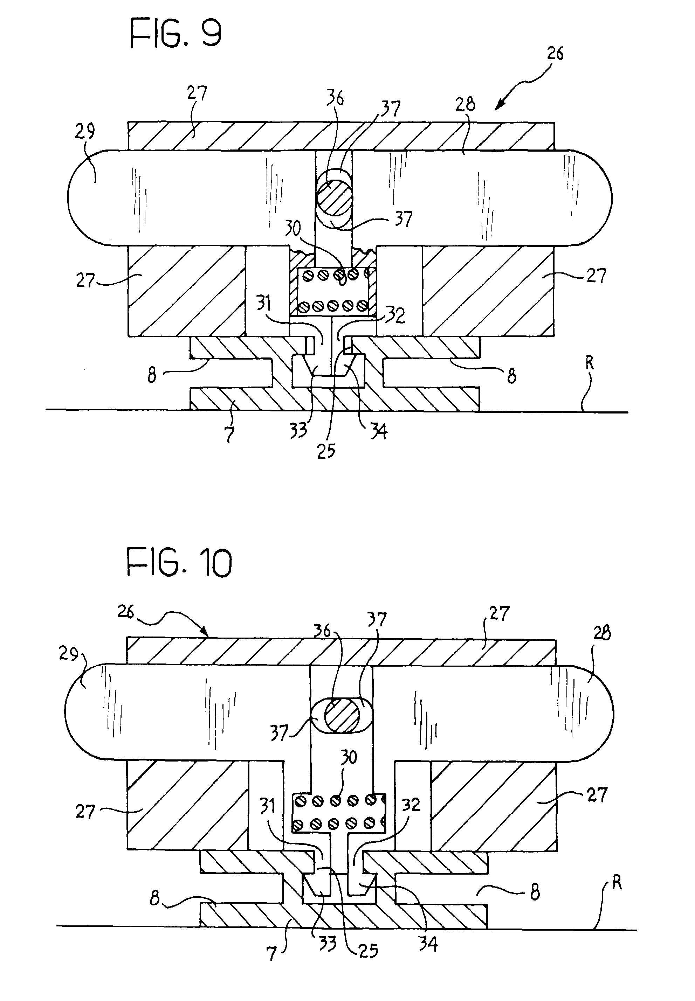

In addition to the configuration of maximum capacity shown in Figures 1 and 2, the modular structure of the transporting system according to the invention enables configurations with reduced carrying capacities to be produced, as shown in Figures 7 and 8. Thus, for example, when the carrying capacity is reduced, only four containers, and in particular the front pair 1, 2 and, for example, the rear pair 5, 6, as shown in Figure 7, can be coupled to the profiled portions 7 and 9 secured to the roof R. To this end, as shown in Figure 2, the central profiled portion 7 can have an aperture 25 for anchoring a front locking device which is indicated 26 in the same Figure. This locking device is also shown in Figures 2e and 7 and is to function as a stop for the front pair of containers 1, 2 in the reduced configuration of the transporting system. An embodiment of this device is shown, for example, in Figures 9 and 10. In this embodiment, the front locking device 26 comprises a body 27 through which extend two opposite members 28 and 29 between which a spring 30 tending to urge them in opposite directions is interposed. The members 28 and 29 have respective ends which project on the exterior of the body 27 and which can be actuated such that they approach each other, against the action of the spring 30, in the manner of push buttons.

At the bottom, the members 27, 28 and 29 comprise respective appendages 31, 32 of which the distal ends form respective coupling teeth 33, 34.

In order to install the front locking device 26, the user presses the push buttons 28 and 29 towards each other, such that their appendages 31, 32 are brought into the approached state. In this state, the locking device 26 is applied to the front profiled portion 7, such that the coupling teeth 33, 34 extend through the aperture 25, as shown in Figure 9. The user then releases the push buttons 28 and 29, which move apart under the action of the spring 30, such that the respective coupling teeth 33 and 34 engage below opposite edge portions of the aperture 25, as shown in Figure 10. In this state, the front locking device 26 is firmly restrained on the central profiled portion. 7 in order to define the stop position of the pair of front containers 1, 2 in the transporting configuration with reduced capacity. The user can then fit these containers 1, 2 and the following pair of containers (for example) 5 and 6 in the profiled portions and lock the assembly formed of these four containers at the rear using the rear locking device 13 described above (Figure 7).

Advantageously, the central profiled portion 7 can have a further aperture 35 (Figure 2) enabling the front locking device 26 to be anchored further back, in order to permit the single pair of containers 1 and 2 to be anchored to the profiled portions 7 and 9, as shown in Figure 8, in order to reduce the carrying capacity even further.

Finally, it will be noted in relation to the front locking device 26 that the latter can be produced in such a way that it can be locked in the anchorage position to the central profiled portion 7 by means of a device having a lock which can be actuated by means of a key. To this end, as shown in Figures 9 and 10, the locking device 26 can comprise a shaft 36 rotatably mounted in the body 27, in the area between the members 28 and 29. This shaft 36 is advantageously provided with two opposite radial appendages 37 and can be disposed in one angular position (Figure 9) in which these appendages enable the members 28 and 29 to approach each other to an extent sufficient to enable the locking device to be disengaged from the profiled portion 7 and in a second angular position (Figure 10) in which this disengagement is prevented. As stated above, the placing of the shaft 36 in the angular position shown in Figure 10 can be controlled by means of a lock and key.

The transporting system having a modular structure described hitherto has numerous advantages. Firstly, it can assume a plurality of configurations with various carrying capacities, as necessary. In all the possible transporting configurations, the system is nevertheless aesthetically and aerodynamically well-integrated in the general shape of the motor vehicle. The individual containers provided in the system are, in fact, suitcases which, in spite of their rather particular shape, are adequately capacious and easy to handle. The system according to the invention is advantageously used on both small and large motor vehicles and in particular on those motor vehicles which, when used with the maximum number of occupants permitted, have a limited amount of space available for transporting luggage and the like.

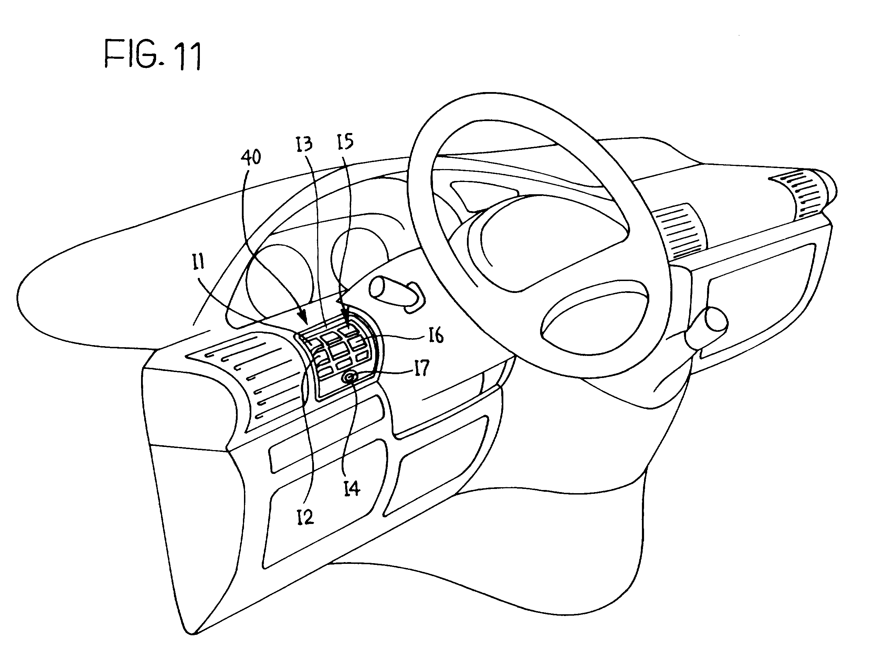

If, as stated above, sensors which can provide signals indicating the presence of the containers 1-6 in the respective anchorage positions and/or that these containers have been locked in position by means of the rear locking device 13 are provided, an optical display panel, such as the one indicated 40 in Figure 11, can be disposed inside the motor vehicle passenger compartment. This panel comprises a plurality of optical indicators I1-I6 each of which is associated with a corresponding container 1-6. A further optical indicator I7 can advantageously be associated with the rear locking device 13. The panel 40 can be connected to the motor vehicle check control system, in order to provide the driver with a luminous signal indicating that the containers 1 to 6 are correctly positioned and that the rear locking device 13 has been locked, before the motor vehicle engine is started.

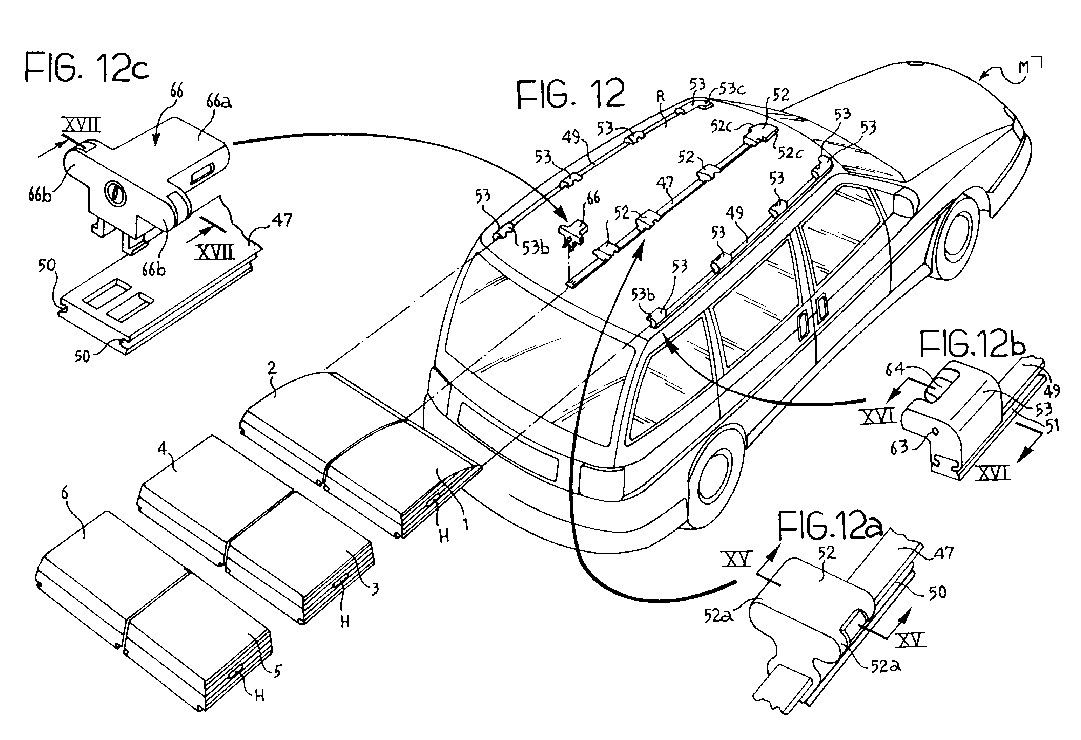

A further embodiment of a modular transporting system according to the invention will now be described with reference to Figures 12 to 18.

In this embodiment, a central strip, secured to the longitudinal centre line of the roof, and two longitudinal side strips 49, adjacent the longitudinal sides of the roof, are applied to the motor vehicle roof R.

The central strip 47 and the side strips 49 have grooves or channels 50 and 51 respectively on their respective sides.

In order to anchor a plurality of suitcase-like containers, for example those again indicated 1-6 in Figure 12, to the motor vehicle roof R, first and second guide elements indicated 52 and 53 respectively are coupled to the strips 47 and 49. These guide elements are locked (as will be described below) in respective operating positions along the strips, at distances which are shorter than the lengths of the containers 1 to 6.

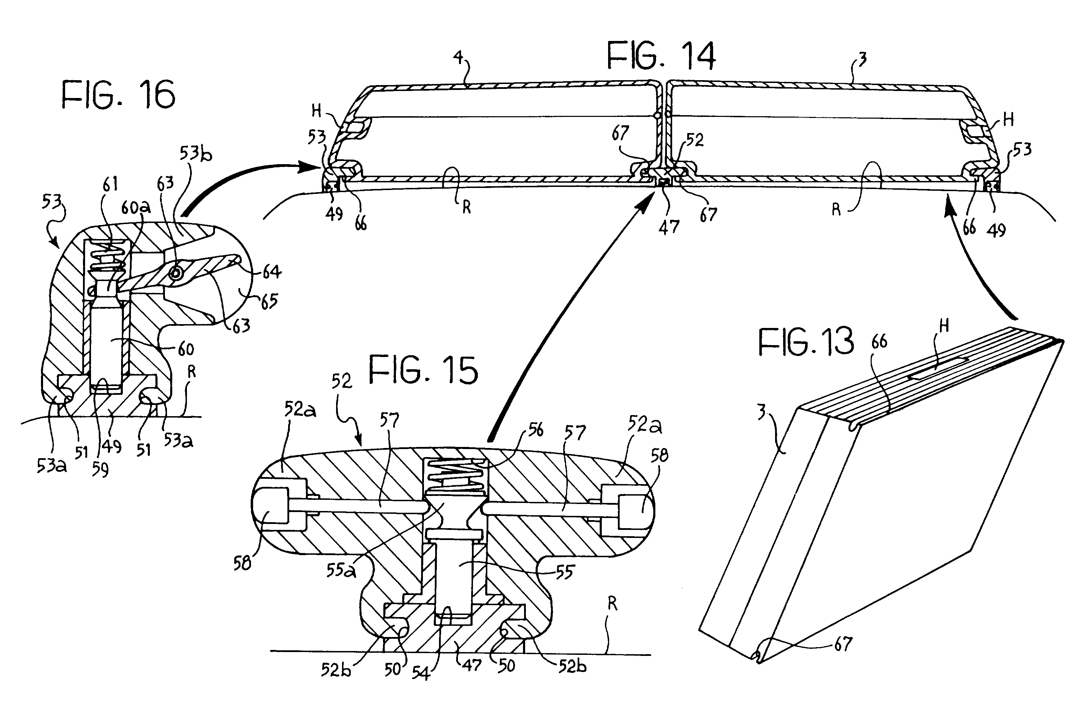

The guide elements 52 anchored to the central strip 47 have a substantially T-shaped section, with respective flanges 52a projecting transversely relative to this strip (see Figures 12a and 15 for example). The lower ends of the legs of these guide elements 52 form pairs of fins which face one another, indicated 52b in Figure 15, and which can be slidingly engaged in the channels 50 in the strip 47.

In order to enable each guide element 52 to be locked in a predetermined position along the strip 47, this strip advantageously has apertures such as those indicated 54 in Figure 15, in which the lower end of a rod 55 displaceably mounted inside the guide element can be engaged. In the embodiment according to Figure 15, the rod 55 is loaded at the top by a helical spring 56 which tends to cause it to protrude at the bottom. The rod 55 has an intermediate portion 55a which is substantially conical and which can cooperate with two opposite transverse control rods 57 the ends of which extend in recesses in the flanges 52a of the guide element 52, there forming respective heads 58.

In order to position a guide element 52 in the required position along the strip 47, the user presses the heads 58, causing the rod 55 to withdraw into the body of the guide element 52. In this state, the user fits the flanges 52b of the guide element into the corresponding channels 50 in the strip 47. The guide element is made to slide to the required position and, when this position is reached, the user releases the heads 58 and the rod 55 engages the recess 54 in the strip 47, under the thrust of the spring 56.

As shown in Figure 12, the guide element 52 which is closest the front side of the roof R has a pair of transverse appendages 52c having a stop function, which will be described in greater detail below.

The guide elements 53 coupled to the side strips 49 are substantially L-shaped with a leg forming a pair of facing appendages 53a which can engage slidingly in the channels 51 in these strips.

Each element 53 has a respective flange 53b which extends substantially horizontally in the direction of the central strip 47.

In order to anchor each of the guide elements 53 in respective predefined portions along the associated strips 49, the latter have respective apertures, such as those indicated 59 in Figure 16. The lower end of a rod 60 mounted so as to be vertically displaceable in the guide element 53, under the action of a helical spring 61, can engage these apertures. The rod 60 has a tapering intermediate portion 60a in which engages a forked end of a balancing device 62 articulated at 63 and having an end 64 which can be manually engaged in correspondence with a notch 65 in the flange 53b of the guide element.

The guide elements 53 are individually coupled to the associated strips 49 whilst the user pressing on the lever 64 determines the lift of the rod 60. In this state, each guide element 53 can be made to slide along the associated strip 49 to the required locking position and, when this position has been reached, the user releases the lever 64 and the spring 61 forces the rod 60 to engage the aperture 59 in the strip.

As can be seen in Figure 12 and even better in Figures 13 and 14, adjacent their faces which are to be turned towards the roof R, the containers 1 to 6 have respective longitudinal side channels, indicated 66 and 67.

By virtue of these channels, each container 1-6 can be made to slide along the guide elements 53, 52. In particular, the channel 66 of each container is made to slide on the flanges 53a of the successive guide elements 53 secured to a strip 49 and the channel 67 slides on the flanges 52a of the guide elements 52. The first pair of containers 1, 2 thus abuts the transverse fins 52c of the first guide element 52 anchored to the strip 47. Advantageously, although not necessarily, in order to improve the abutment and stopping of these containers 1, 2, the first guide elements 53 can also have respective transverse stop appendages, indicated 53c in Figure 12.

When all six containers 1-6 have been coupled to the guide elements 52, 53, the assembly formed by these containers can be locked in the longitudinal direction by means of a locking device, such as the one indicated 66 in Figures 12, 12c, 17 and 18.

This locking device preferably comprises an appendage 66a (Figure 12c) which can be introduced into the rear ends of the channels 67 of the pair of rear containers 5, 6. The body of the locking device 66 also has a pair of projecting transverse flanges 66b, intended to press against the rear walls of the containers 5, 6, preventing all possibility of their being moved in the longitudinal direction of the motor vehicle.

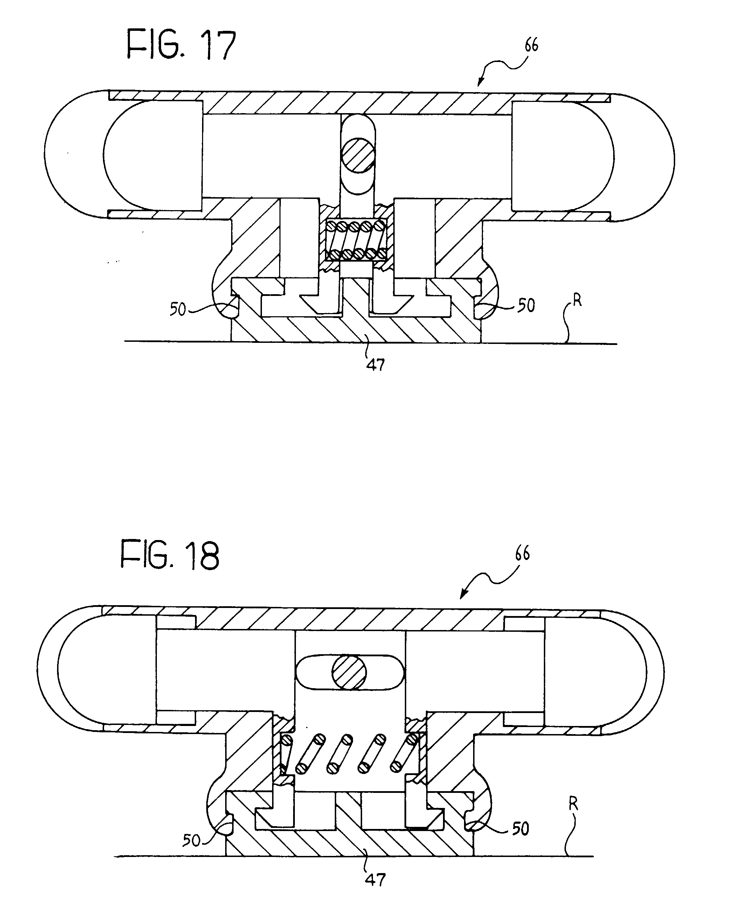

The locking device 66 is stably anchored at the rear end of the central strip 47, for example, in the manner shown clearly in Figures 17 and 18. In the embodiment shown by way of example in these Figures, the internal structure of the locking device 66 corresponds substantially to that of the locking device 26 described in detail with reference to Figures 9 and 10. A detailed description of Figures 17 and 18 is thus superfluous and will therefore be omitted.

Also in the embodiment described above with reference to Figures 12 to 18, the modular transporting system can be used in different configurations corresponding to different load capacities. In particular, in addition to the configuration of maximum capacity, in which all the containers 1-6 are used, it is thus possible to produce configurations for transportation with reduced capacity with four or two containers alone, substantially as shown in Figures 7 and 8 in relation to the embodiment described above.

In order to use a smaller number of containers, the user evidently has to anchor a smaller number of guide elements 52, 53 to the strips 47 and 49.

In any case, when it is not necessary to use the transporting system on the roof, the guide elements 52, 53 can advantageously be removed and placed, for example, inside the motor vehicle and only the strips 49 remain installed on the roof R, causing a visible or aesthetic "disturbance" which is practically negligible.

In the embodiment according to Figures 12 to 18 also, sensor means of known type (not shown), which can provide electrical signals indicating the presence of the containers in the respective anchorage positions provided, can be associated with the strips 47, 49 or with the guide elements 52, 53.

A position sensor can further be associated with the rear locking device 66.

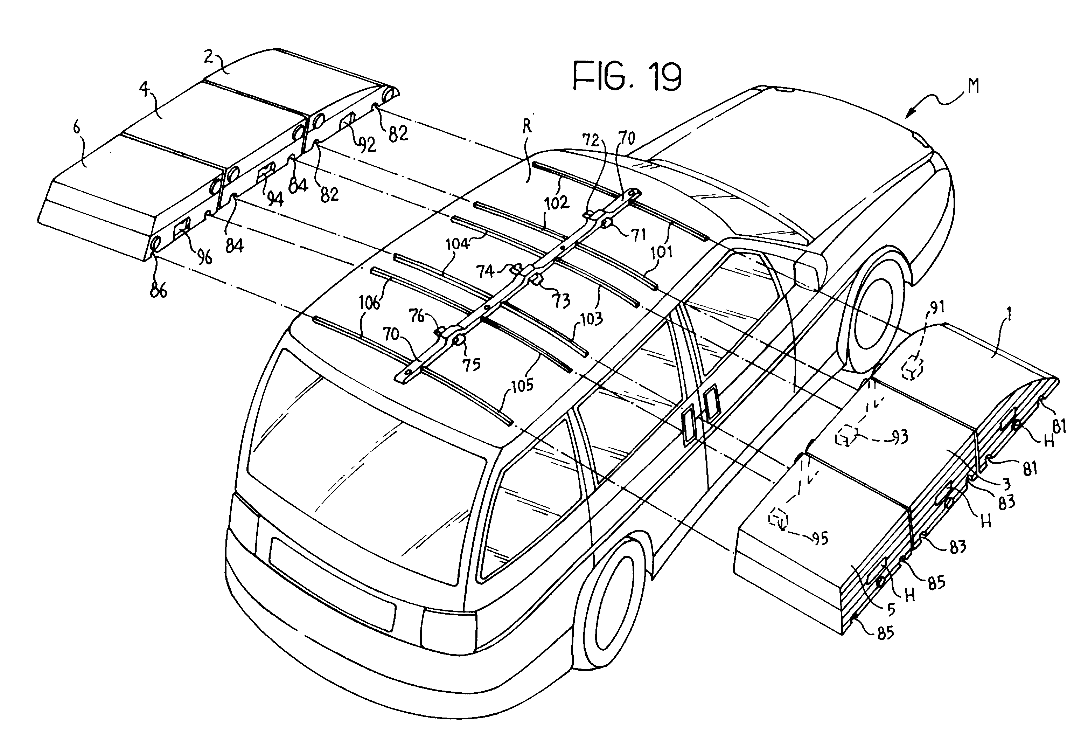

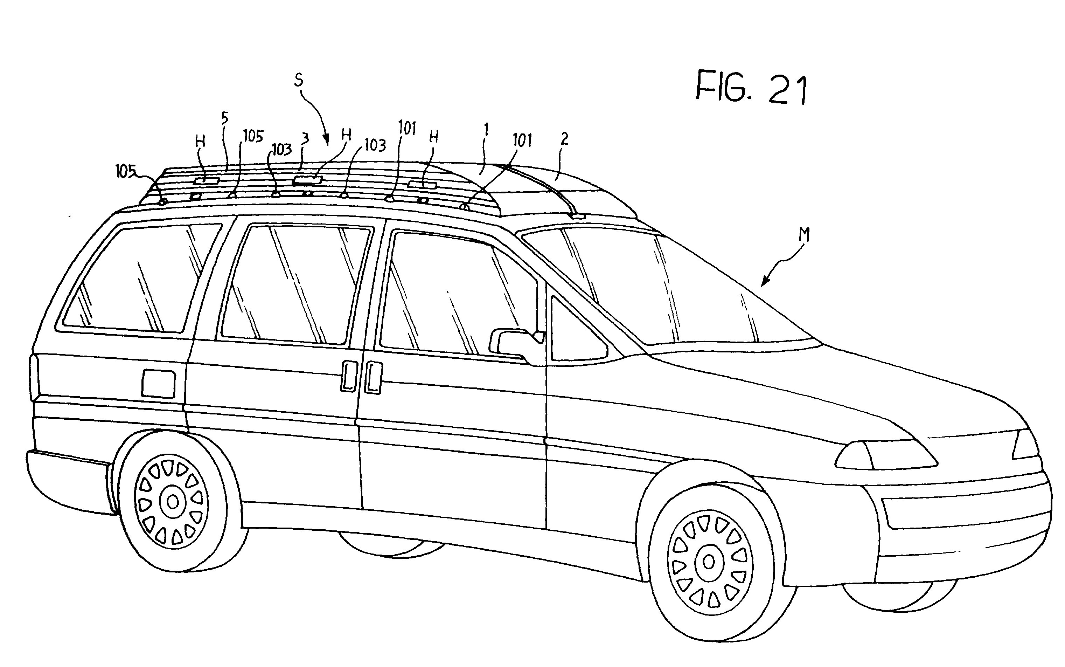

A third embodiment of a transporting system according to the invention will now be described with reference to Figures 19 to 21.

In the third embodiment also, the system provides for the use of a given maximum number of pairs of containers of specular form.

In the embodiment shown by way of example, the use of three pairs of containers which are again indicated by the numbers 1 to 6 is provided for in particular.

In the solution according to Figures 19 to 21, pairs of parallel guides, directed transversely to the longitudinal axis of the roof R, are secured thereto. Figure 19 shows in particular six pairs of guides indicated 101 to 106. These guides advantageously consist of a plastics material with a low coefficient of friction, for example polytetrafluoroethylene (Teflon), preferably of a colour corresponding to that of the bodywork of the motor vehicle M.

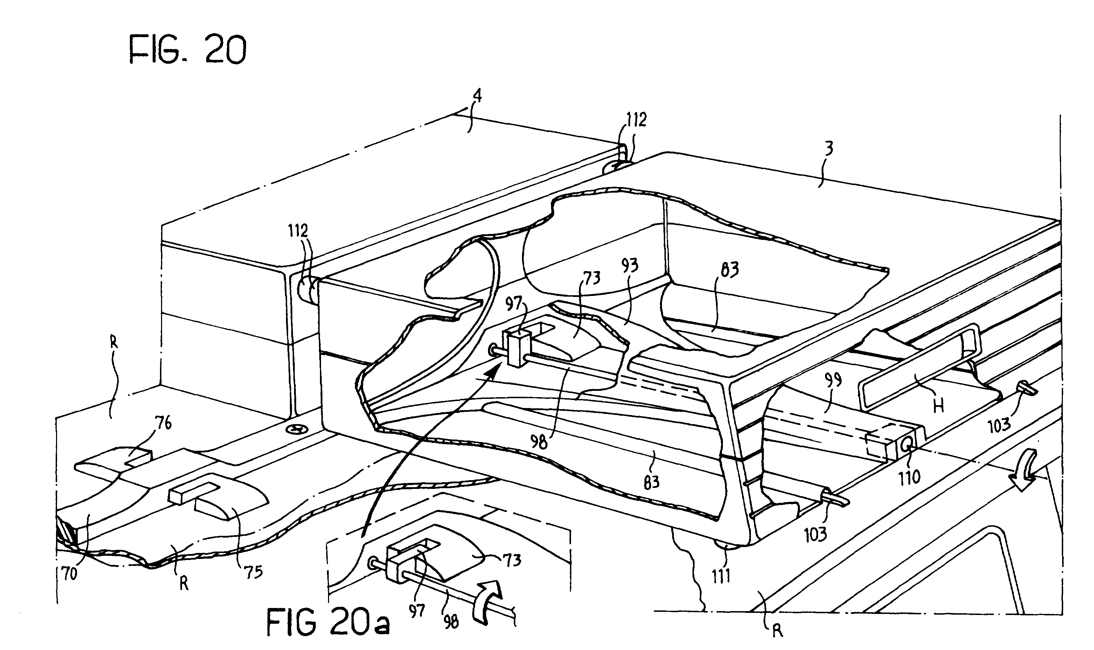

A strip 70 which forms a hooked retaining member for each of the containers 1 to 6 in predetermined positions on the sides is removably secured along the centre line of the roof R. In Figure 19 these hooked members are indicated 71-76. As will be better seen from Figure 20, the hooked members 71-76 extend at a spacing from the surface of the roof R.

In the respective faces to be turned towards the roof R, the containers 1 to 6 have respective pairs of parallel channels or grooves 81-86 which can engage in a supporting and sliding manner on the associated guides 101-106 applied to this roof.

In the respective faces to be turned towards the longitudinal axis of the roof R, the containers 1-6 have respective recesses 91-96 (Figure 19) which can be coupled firmly to the associated hooked members 71-76 carried by the strip 70.

As will be described in greater detail below, a locking device which can cooperate with the associated hooked retention member of the strip 70 is accommodated in the recess of each container.

In the embodiment according to Figures 19 to 21, the containers 1 to 6 can be individually supported on the associated guides 101-106 installed on the sides of the vehicle and thus very conveniently. Furthermore, as will become clearer from the following, these containers can be individually mounted and removed from the roof, with obvious advantages in terms of convenience and practicality of use.

Figures 20 and 20a show a possible embodiment of the locking device associated with each container, purely by way of example. In the embodiment illustrated, this device comprises a bolt 97 carried by a shaft 98 which can rotate in a base opening 99 adjacent the base of the container. The shaft 98 can be actuated in rotation by means of a lock cylinder 110 which is accessible on the side face of the container which, in its state of use, is turned towards the body side. of the motor vehicle. By means of the shaft 98, the bolt 97 can be placed in an angular position in which it engages the notch in the hooked member to which the container is coupled (hooked member 73 in Figures 20 and 20a). The engagement of this hooked member in the associated recess in the container prevents the movement of the container in the vertical direction relative to the part. The engagement of the bolt 97 in the notch in the hooked member prevents the container uncoupling from this hooked member. In order to prevent the containers 3 jumping and vibrating, they can advantageously be provided with resilient pads on their faces to be turned towards the roof R and towards the adjacent containers. Some of these resilient pads are shown in Figure 20 where they are indicated by the reference numerals 111 and 112.

During the operations for coupling and uncoupling the containers 1-6 to and from the associated hooked members 71-76, these containers slide on the associated guides 101-106 without coming into contact with the surface of the roof R, except with their lower resilient pads 111. Every possibility of the surface of the roof being scratched or cut is thus avoided.

The variant described above with reference to Figures 19 to 21 also enables different configurations of the system, corresponding to different carrying capacities, to be produced.

Naturally, the principle of the invention remaining the same, the forms of embodiment and details of production can be widely varied with respect to that which has been described and illustrated purely by way of non-limiting example, without, however, departing from the scope of the present invention as defined in the appended Claims.

## Claims

1. A system for transporting luggage and the like on the roof (R) of a motor vehicle (M) comprising one (first) pair of substantially suitcase-like containers (1, 2) which are substantially the mirror image of one another, having a width which is substantially less than or equal to half the width of the roof (R) of the motor vehicle (M) and having a substantially wedge-shaped aerodynamic profile; said containers (1, 2) being adapted to be anchored removably to retention and guide means (7, 9, 13, 26; 47, 49, 52, 53; 70-76) associated with the roof (R) in an arrangement of use in which said containers (1, 2) are disposed above the roof (R) adjacent one another, parallel to the transverse sides of the roof (R);
the system being characterised in that said retention and guide means (7, 9, 13, 26; 47, 49, 52, 53; 70-76) form a load-bearing structure which is separate and distinct from the roof (R) and which is adapted to be applied onto and secured to the upper surface or face of said roof (R) so as to be interposed between said containers (1, 2) and the upper surface or face of the roof (R);
said structure including a central elongate longitudinal member (7; 47; 70) adapted to be secured to said surface or face of the roof (R) and to retain on each of its sides a respective one of said containers (1, 2), and
a plurality of lateral retention and guide members (9; 49, 53; 101-106) adapted to allow the movement of said containers (1, 2) to and from their anchoring positions by a sliding displacement without said containers (1, 2) coming into contact with the upper surface or face of the roof (R);
said structure being further configured so as to define a plurality of anchorage positions for said containers (1, 2) staggered along the longitudinal direction of the roof (R).

2. A system according to Claim 1, characterized in that it comprises at least a second pair of containers (5, 6) of specular form, which have a width (L) substantially less than or equal to half the width of the roof (R) and which can be disposed adjacent one another parallel to the transverse sides of the roof (R), adjacent the rear faces of the containers (1, 2) of the first pair, and having a shape such that, contiguously with one another and with the containers (1, 2) of the first pair, they form a volume having a substantially wedge-shaped aerodynamic shape.

3. A system according to Claim 2, characterized in that the retention and guide means (7, 9, 13, 26; 47, 49, 52, 53, 66; 70-76) are configured so as to define a plurality of successive anchorage positions in the longitudinal direction of the motor vehicle (M) for the assembly formed by the first and second pairs of containers (1, 2; 5, 6).

4. A system according to any one of the preceding claims, characterized in that the containers (1-6) are provided with respective handles (H) on the respective faces which are turned towards the body sides of the motor vehicle (M) in the mounted state on the roof (R).

5. A system according to any one of the preceding claims, characterized in that sensor means which can provide electrical signals indicating the presence of the containers (1-6) in the anchorage positions are associated with the retention and guide means (7, 9, 13, 26; 47, 49, 52, 53, 66; 70-76).

6. A system according to Claim 5, characterized in that it further comprises optical or acoustic signalling means (40) which can be controlled on the basis of the signals provided by the sensor means, in order to signal the presence of the containers (1-6) in the respective preset anchorage positions.

7. A system according to any one of the preceding claims, characterized in that the retention and guide means comprise:
a profiled portion (7) with a substantially H-shaped section, to be secured on the longitudinal centre line of the roof (R) and defining two longitudinal channels or guides (8) in its sides;
a first and second C-shaped profiled portion (9) to be secured along the longitudinal sides of the roof (R) with the respective recesses (10) facing the H-shaped profiled portion (7); and in that each of the containers (1-6) has respective side fins (11) which can engage slidingly a channel or guide (10) of a C-shaped profiled portion (9) and the channel or guide (8) of the H-shaped profiled portion.

8. A system according to Claim 7, characterized in that at least the channels or guides (8) of the H-shaped profiled portion (7) and/or those (10) of the C-shaped profiled portions (9) at the end facing the front side of the roof (R) are transversely closed in order to stop the containers (1-6) sliding; and it being possible to couple a first locking device (13), which can prevent the containers (1-6) being removed from the profiled portions (7, 9), to the rear end of the H-shaped profiled portion (7).

9. A system according to Claim 8, characterized in that it further comprises a second locking device (26) which can be coupled to the H-shaped profiled portion (7) in preset intermediate positions in order to define corresponding abutment limit positions for the first pair of containers (1, 2).

10. A system according to any one of Claims 1 to 6, characterized in that the retention and guide means comprise:
a central strip (47) to be secured on the longitudinal centre line of the roof (R) and having on each side a respective groove (50); and
a first and a second side strip (49) to be secured along the longitudinal sides of the roof (R) parallel to the central strip (47) and having a respective groove (51) on each side;
a plurality of first guide elements (52) which are substantially T-shaped and which can be slidingly coupled in the longitudinal side grooves (50) in the central strip (47) and can be locked in an unlockable manner in respective operating positions defined along this strip (47) at distances which are shorter than the lengths of these containers (1-6), in which operating positions the flanges (52a) of the guide elements (52) extend transversely to the central strip (47); and
a first and a second plurality of second guide elements (53) which are substantially L-shaped and have first legs which can be slidingly engaged in the grooves (51) in one of the side strips (49); it being possible to lock the second guide elements (53) in an unlockable manner in respective operating positions defined in the associated side strips (49), at distances which are shorter than the lengths of the containers (1-6), and in which positions their second legs (53b) extend transversely, in the direction of the central strip (47);
the containers (1-6) having respective parallel longitudinal side channels (66, 67) which can be slidingly coupled to the flanges (52a) and respectively to the second legs (53b) of the first and of the second guide elements (52, 53) respectively;
at least one of the first guide elements (52) and/or at least one pair of the second guide elements (53) being configured so as to have stop surfaces for defining front abutment limit positions for the first pair of containers (1, 2).

11. A system according to Claim 10, characterized in that it further comprises a locking device (66) which can be coupled to the strips (47, 49), in particular to the central strip (47), so as to prevent the removal of the containers (1-6) from the guide elements (52, 53).

12. A system according to any one of Claims 1 to 6, characterized in that the retention and guide means comprise:
at least a first and a second group of guides (101-106) to be secured to the roof (R) in respective parallel directions, transversely to the longitudinal axis of the roof (R); and
a plurality of pairs of retention devices (71, 72; 73, 74; 75, 76) to be secured in respective predetermined positions along the longitudinal centre line of the roof (R); and in that, in the respective face to be turned towards the roof (R), the containers (1-6) have respective pluralities of parallel channels or grooves (81-86) which can engage in a supporting and sliding manner on the guides (101-106) of each group of guides, and, in the respective face to be turned towards the longitudinal axis of the roof (R), they comprise a respective locking and coupling device (97, 98) which can be coupled to one of the retention devices (71-76).

13. A system according to Claim 12, characterized in that the guides (101-106) are made of a plastics material having a low coefficient of friction, in particular of polytetrafluoroethylene.

14. A system according to Claim 12 or 13, characterized in that each retention device comprises a hooked member (71-76), and the coupling and locking device of each container (1-6) has a recess (91-96) of the container (1-6) which can accommodate the hooked member (71-76), and in which a movable bolt (97) is mounted which can be actuated from the exterior of the container (1-6) and can engage the hooked member (71-76).

15. A system according to Claim 14, characterized in that the bolt (97) is carried by a shaft (98) which is rotatably supported adjacent the wall of the container (1-6) facing the roof (R) of the motor vehicle in use, and which can be actuated in rotation by means of a lock (110) disposed on the side face of the container (1-6) which, in use, is turned towards the motor vehicle body side.

## Patentansprüche

1. System für den Transport von Gepäck und ähnlichem auf dem Dach (R) eines Kraftfahrzeugs (M), wobei das System ein (erstes) Paar von im wesentlichen kofferartigen Behältern (1, 2) enthält, die im wesentlichen spiegelbildlich zueinander ausgebildet sind und eine Breite besitzen, die im wesentlichen schmäler oder gleich der halben Breite des Dachs (R) des Kraftfahrzeugs (M) ist, und die eine im wesentlichen keilförmige, aerodynamische Form besitzen; wobei die Behälter (1, 2) so ausgebildet sind, dass sie an Halterungs/Führungs-Einrichtungen (7, 9, 13, 26; 47, 49, 52, 53; 70-76), die dem Dach (R) zugeordnet sind, in einer Betriebsanordnung abnehmbar verankert werden, in der die Behälter (1, 2) über dem Dach (R) nebeneinander parallel zu den Querseiten des Dachs (R) angeordnet sind;
wobei das System dadurch gekennzeichnet ist, dass die Halterungs/Führungs-Einrichtungen (7, 9, 13, 26; 47, 49, 52, 53; 70-76) einen tragenden Aufbau bilden, der vom Dach (R) getrennt und abgesondert ist und dazu dient, um auf der Oberfläche oder Fläche des Dachs (R) so angebracht und befestigt zu werden, dass er zwischen den Behältern (1, 2) und der Oberfläche oder Fläche des Dachs (R) liegt;
wobei der Aufbau ein mittleres, längliches Längselement (7; 47; 70) aufweist, das dazu dient, um an der Oberfläche oder Fläche des Dachs (R) befestigt zu werden und an jeder seiner Seiten einen entsprechenden Behälter (1, 2) einzuspannen; sowie
eine Vielzahl von seitlichen Halterungs/Führungs-Elementen (9; 49, 53; 101-106) aufweist, die dazu dienen, um die Bewegung der Behälter (1, 2) in und aus ihren Verankerungsstellungen mit einer gleitenden Verschiebung zu ermöglichen, ohne dass die Behälter (1, 2) mit der Oberfläche oder Fläche des Dachs (R) in Berührung gelangen;
wobei der Aufbau weiters so erfolgt, dass er eine Vielzahl von Verankerungsstellungen für die Behälter (1, 2) festlegt, die entlang der Längsrichtung des Dachs (R) versetzt sind.

2. System gemäß Anspruch 1, dadurch gekennzeichnet, dass das System zumindest ein zweites Paar von Behältern (5, 6) besitzt, die spiegelbildlich ausgebildet sind und eine Breite (L) besitzen, die im wesentlichen schmäler oder gleich der halben Breite des Dachs (R) ist, wobei die Behälter nebeneinander parallel zu den Querseiten des Dachs (R) neben den Hinterflächen der Behälter (1, 2) des ersten Paars angeordnet werden können, wobei sie so ausgebildet sind, dass sie angrenzend aneinander und an die Behälter (1, 2) des ersten Paares einen Raum bilden, der eine im wesentlichen keilförmige, aerodynamische Form besitzt.

3. System gemäß Anspruch 2, dadurch gekennzeichnet, dass die Halterungs/Führungs-Einrichtungen (7, 9, 13, 26; 47, 49, 52, 53, 66; 70-76) so ausgebildet sind, dass sie in Längsrichtung des Kraftfahrzeugs (M) eine Vielzahl von aufeinanderfolgenden Verankerungsstellungen für den Aufbau festlegen, der vom ersten und zweiten Paar von Behältern (1, 2; 5, 6) gebildet wird.

4. System gemäß irgendeinem der bisherigen Ansprüche, dadurch gekennzeichnet, dass die Behälter (1-6) mit entsprechenden Griffen (H) auf entsprechenden Flächen versehen sind, die im montierten Zustand auf dem Dach (R) zu den Karosserieseiten des Kraftfahrzeugs (M) gerichtet sind.

5. System gemäß irgendeinem der bisherigen Ansprüche, dadurch gekennzeichnet, dass eine Fühlereinrichtung, die elektrische Signale liefern kann, die das Vorhandensein der Behälter (1-6) in den Verankerungsstellungen anzeigen, den Halterungs/Führungs-Einrichtungen (7, 9, 13, 26; 47, 49, 52, 53, 66; 70-76) zugeordnet ist.

6. System gemäß Anspruch 5, dadurch gekennzeichnet, dass das System weiters eine optische oder akustische Signaleinrichtung (40) enthält, die mit den Signalen gesteuert werden kann, die von der Fühlereinrichtung geliefert werden, um das Vorhandensein der Behälter (1-6) in den entsprechenden vorgegebenen Verankerungsstellungen anzuzeigen.

7. System gemäß irgendeinem der bisherigen Ansprüche, dadurch gekennzeichnet, dass die Halterungs/Führungs-Einrichtungen enthalten:
einen Profilteil (7) mit einem im wesentlichen H-förmigen Querschnitt, der an der Längsmittelachse des Dachs (R) befestigt werden kann und an seinen Seiten zwei Längskanäle oder Führungen (8) bildet;
einen ersten und zweiten C-förmigen Profilteil (9), der entlang der Längsseiten des Dachs (R) befestigt werden kann, wobei die entsprechenden Ausnehmungen (10) zum H-förmigen Profilteil (7) gerichtet sind; und dass jeder Behälter (1-6) entsprechende Seitennasen (11) besitzt, die verschiebbar in einen Kanal oder Führung (10) eines C-förmigen Profilteils (9) sowie in den Kanal oder die Führung (8) des H-förmigen Profilteils eingreifen können.

8. System gemäß Anspruch 7, dadurch gekennzeichnet, dass zumindest die Kanäle oder Führungen (8) des H-förmigen Profilteils (7) und/oder jene (10) der C-förmigen Profilteile (9) an jenem Ende, das der Vorderseite des Dachs (R) gegenüberliegt, in Querrichtung verschlossen sind, um die Verschiebung der Behälter (1-6) anzuhalten; wobei es möglich ist, eine erste Verriegelungseinrichtung (13), die verhindern kann, dass die Behälter (1-6) von den Profilteilen (7, 9) entfernt werden, mit dem Hinterende des H-förmigen Profilteils (7) zu kuppeln.

9. System gemäß Anspruch 8, dadurch gekennzeichnet, dass das System weiters eine zweite Verriegelungseinrichtung (26) enthält, die in vorgegebenen Zwischenstellungen mit dem H-förmigen Profilteil (7) gekuppelt werden kann, um entsprechende Anschlaggrenzstellungen für das erste Paar von Behältern (1, 2) festzulegen.

10. System gemäß irgendeinem der Ansprüche 1 bis 6, dadurch gekennzeichnet, dass die Halterungs/Führungs-Einrichtungen enthalten:
eine Mittelleiste (47), die an der Längsmittelachse des Dachs (R) befestigt werden kann und an jeder Seite eine entsprechende Rille (50) besitzt; und
eine erste und zweite Seitenleiste (49), die entlang der Längsseiten des Dachs (R) parallel zur Mittelleiste (47) befestigt werden können und an jeder Seite eine entsprechende Rille (51) besitzen;
eine Vielzahl von ersten Führungselementen (52), die im wesentlichen T-förmig ausgebildet sind und in den länglichen Seitenrillen (50) in der Mittelleiste (47) verschiebbar gekuppelt und entriegelbar in entsprechenden Betriebsstellungen verriegelt werden können, die entlang dieser Leiste (47) in Abständen angeordnet sind, die kürzer als die Längen dieser Behälter (1-6) sind, wobei die Flansche (52a) der Führungselemente (52) in diesen Betriebsstellungen quer zur Mittelleiste (47) verlaufen; und
erste und zweite Vielzahl von zweiten Führungselementen (53), die im wesentlichen L-förmig ausgebildet sind und erste Schenkel besitzen, die in die Rillen (51) in einer der Seitenleisten (49) verschiebbar eingreifen können; wobei es möglich ist, die zweiten Führungselemente (53) entriegelbar in entsprechenden Betriebsstellungen zu verriegeln, die in den zugeordneten Seitenleisten (49) in Abständen festgelegt sind, die kürzer als die Längen der Behälter (1-6) sind, wobei ihre zweiten Schenkel (53b) in diesen Stellungen quer in Richtung der Mittelleiste (47) verlaufen;
wobei die Behälter (1-6) entsprechende parallele, längliche Seitenkanäle (66, 67) besitzen, die mit den Flanschen (52a) bzw. mit den zweiten Schenkeln (53b) der ersten bzw. zweiten Führungselemente (52, 53) verschiebbar gekuppelt werden können;
wobei zumindest eines der ersten Führungselemente (52) und/oder zumindest ein Paar der zweiten Führungselemente (53) so aufgebaut sind, dass sie Anschlagflächen besitzen, um Anschlaggrenzstellungen für das erste Paar von Behältern (1, 2) festzulegen.

11. System gemäß Anspruch 10, dadurch gekennzeichnet, dass das System weiters eine Verriegelungseinrichtung (66) enthält, die mit den Leisten (47, 49), im besonderen mit der Mittelleiste (47), gekuppelt werden kann, um das Entfernen der Behälter (1-6) aus den Führungselementen (52, 53) zu verhindern.

12. System gemäß irgendeinem der Ansprüche 1 bis 6, dadurch gekennzeichnet, dass die Halterungs/Führungs-Einrichtungen enthalten:
zumindest eine erste und zweite Gruppe von Führungen (101-106), die am Dach (R) in entsprechenden parallelen Richtungen quer zur Längsachse des Dachs (R) befestigt werden; und
eine Vielzahl von Paaren von Halterungseinrichtungen (71, 72; 73, 74; 75, 76), die an entsprechenden vorgegebenen Stellungen entlang der Längsmittelachse des Dachs (R) befestigt werden; und dass die Behälter (1-6) in der entsprechenden Fläche, die zum Dach (R) gerichtet ist, entsprechende Vielzahlen von parallelen Kanälen oder Rillen (81-86) besitzen, die haltend und gleitend in die Führungen (101-106) einer jeden Gruppe von Führungen eingreifen können, wobei sie in der entsprechenden Fläche, die zur Längsachse des Dachs (R) gerichtet ist, eine entsprechende Verriegelungs/Kupplungs-Einrichtung (97, 98) enthalten, die mit einer der Halterungseinrichtungen (71-76) gekuppelt werden kann.

13. System gemäß Anspruch 12, dadurch gekennzeichnet, dass die Führungen (101-106) aus Kunststoff hergestellt werden, der einen niedrigen Reibungskoeffizienten besitzt, im besonderen aus Polytetrafluoräthylen.

14. System gemäß Anspruch 12 oder 13, dadurch gekennzeichnet, dass jede Halterungseinrichtung ein Hakenelement (71-76) enthält, wobei die Kupplungs/Verriegelungs-Einrichtung eines jeden Behälters (1-6) eine Ausnehmung (91-96) des Behälters (1-6) besitzt, die das Hakenelement (71-76) aufnehmen kann und in der ein bewegbarer Bolzen (97) angebracht ist, der von außerhalb des Behälters (1-6) betätigt werden und in das Hakenelement (71-76) eingreifen kann.

15. System gemäß Anspruch 14, dadurch gekennzeichnet, dass der Bolzen (97) auf einer Welle (98) sitzt, die neben jener Wand des Behälters (1-6) drehbar gelagert ist, die im Betrieb dem Dach (R) des Kraftfahrzeugs gegenüberliegt, wobei die Welle mit einem Schloss (110) in Drehung versetzt werden kann, das an jener Seitenfläche des Behälters (1-6) angebracht ist, die im Betrieb zur Karosserieseite des Kraftfahrzeugs gerichtet ist.

## Revendications

1. Système pour le transport de bagages et équivalent sur le toit (R) d'un véhicule à moteur (M) comportant une (première) paire de réceptacles sensiblement en forme de valise (1, 2) qui sont sensiblement le reflet l'un de l'autre, ayant une largeur qui est sensiblement inférieure ou égale à la moitié de la largeur du toit (R) du véhicule à moteur (M) et ayant un profil aérodynamique sensiblement en forme de coin; lesdits réceptacles (1, 2) étant prévus pour être ancrés de façon démontable sur des moyens de retenue et de guidage (7, 9, 13, 26; 47, 49, 52, 53; 70 à 76) associés au toit (R) dans un agencement d'utilisation dans lequel lesdits réceptacles (1, 2) sont disposés au-dessus du toit (R) de façon adjacente l'un à l'autre, parallèlement aux côtés transversaux du toit (R);
le système étant caractérisé en ce que lesdits moyens de retenue et de guidage (7, 9, 13, 26; 47, 49, 52, 53; 70 à 76) forment une structure porteuse qui est séparée et distincte du toit (R) et qui est prévue pour être appliquée et fixée sur la surface ou face supérieure dudit toit (R) afin d'être interposée entre lesdits réceptacles (1, 2) et la surface ou face supérieure du toit (R);
ladite structure comprenant un élément longitudinal allongé central (7; 47; 70) prévu pour être fixé sur la ladite surface ou face du toit (R) et pour retenir sur chacun de ses côtés un réceptacle respectif desdits réceptacles (1, 2), et
une multiplicité d'éléments de retenue et de guidage latéraux (9; 49, 53; 101 à 106) prévus pour permettre le déplacement desdits réceptacles (1, 2) vers et depuis leurs positions d'ancrage grâce à un déplacement coulissant sans que lesdits réceptacles (1, 2) entrent en contact avec la surface ou face supérieure du toit (R);
ladite structure étant en outre configurée afin de définir une multiplicité de positions d'ancrage pour lesdits réceptacles (1, 2) décalées le long de la direction longitudinale du toit (R).

2. Système selon la revendication 1, caractérisé en ce qu'il comporte au moins une deuxième paire de réceptacles (5, 6) de forme symétrique, qui ont une largeur (L) sensiblement inférieure ou égale à la moitié de la largeur du toit (R) et qui peuvent être disposés de façon adjacente l'un à l'autre parallèlement aux côtés transversaux du toit (R), de façon adjacente aux faces arrière des réceptacles (1, 2) de la première paire, et ayant une forme telle que, de manière contiguë l'un à l'autre et aux réceptacles (1, 2) de la première paire, ils forment un volume ayant une forme aérodynamique essentiellement en forme de coin.

3. Système selon la revendication 2, caractérisé en ce que les moyens de retenue et de guidage (7, 9, 13, 26; 47, 49, 52, 53, 66; 70 à 76) sont configurés afin de définir une multiplicité de positions d'ancrage successives dans le sens longitudinal du véhicule à moteur (M) pour l'ensemble constitué par les première et deuxième paires de réceptacles (1, 2; 5, 6).

4. Système selon l'une quelconque des revendications précédentes, caractérisé en ce que les réceptacles (1 à 6) sont pourvus de poignées respectives (H) sur les faces respectives qui sont tournées vers les côtés de carrosserie du véhicule à moteur (M) dans l'état monté sur le toit (R).

5. Système selon l'une quelconque des revendications précédentes, caractérisé en ce que des moyens de détection qui peuvent délivrer des signaux électriques indiquant la présence des réceptacles (1 à 6) dans les positions d'ancrage sont associés aux moyens de retenue et de guidage (7, 9, 13, 26; 47, 49, 53, 66; 70 à 76).

6. Système selon la revendication 5, caractérisé en ce qu'il comporte en outre des moyens de signalisation optiques ou acoustiques (40) qui peuvent être commandés sur la base des signaux délivrés par les moyens de détection, afin de signaler la présence des réceptacles (1 à 6) dans les positions d'ancrage prédéterminées respectives.

7. Système selon l'une quelconque des revendications précédentes, caractérisé en ce que les moyens de retenue et de guidage comportent:
une partie profilée (7) avec une section sensiblement en forme de H, devant être fixée sur l'axe longitudinal du toit (R) et définissant deux canaux ou guides longitudinaux (8) dans ses côtés;
une première et une deuxième partie profilée en forme de C (9) devant être fixées le long des côtés longitudinaux du toit (R) avec les renfoncements respectifs (10) faisant face à la partie profilée en forme de H (7); et en ce que chacun des réceptacles (1 à 6) a des pattes latérales respectives (11) qui peuvent engager de façon coulissant un canal ou guide (10) d'une partie profilée en forme de C (9) et le canal ou guide (8) de la partie profilée en forme de H.

8. Système selon la revendication 7, caractérisé en ce qu'au moins les canaux ou guides (8) de la partie profilée en forme de H (7) et/ou ceux (10) des parties profilées en forme de C (9) à l'extrémité faisant face au côté avant du toit (R) sont fermés transversalement afin d'arrêter les réceptacles (1 à 6) qui coulissent; et il est possible de relier un premier dispositif de blocage (13), qui peut empêcher les réceptacles (1 à 6) d'être enlevés des parties profilées (7, 9), à l'extrémité arrière de la partie profilée en forme de H (7).

9. Système selon la revendication 8, caractérisé en ce qu'il comporte en outre un deuxième dispositif de blocage (26) qui peut être relié à la partie profilée en forme de H (7) dans des positions intermédiaires prédéterminées afin de définir des positions correspondantes de limite de butée pour la première paire de réceptacles (1, 2).

10. Système selon l'une quelconque des revendications 1 à 6, caractérisé en ce que les moyens de retenue et de guidage comportent:
une bande centrale (47) devant être fixée sur l'axe longitudinal du toit (R) et ayant de chaque côté une rainure respective (50);
une première et une deuxième bande latérale (49) devant être fixée le long des côtés longitudinaux du toit (R) parallèlement à la bande centrale (47) et ayant une rainure respective (51) de chaque côté;
une multiplicité de premiers éléments de guidage (52) qui sont sensiblement en forme de T et qui peuvent être reliés de façon coulissante aux rainures latérales longitudinales (50) dans la bande centrale (47) et peuvent être bloqués d'une manière libérable dans des positions respectives de fonctionnement définies le long de cette bande (47) à des distances qui sont plus courtes que les longueurs de ces réceptacles (1 à 6), les ailes (52a) des éléments de guidage (52) s'étendant transversalement à la bande centrale (47) dans ces positions de fonctionnement; et
une première et deuxième multiplicité de deuxièmes éléments de guidage (53) qui sont essentiellement en forme de L et ont des premières pattes qui peuvent être engagées de façon coulissante dans les rainures (51) dans une des bandes latérales (49); les deuxièmes éléments de guidage (53) pouvant être bloqués d'une manière libérable dans des positions respectives de fonctionnement définies dans les bandes latérales associées (49), à des distances qui sont plus courtes que les longueurs des réceptacles (1 à 6), et leurs deuxièmes pattes (53b) s'étendant transversalement, dans le sens de la bande centrale (47) dans ces positions;
les réceptacles (1 à 6) ayant des canaux latéraux longitudinaux parallèles respectifs (66, 67) qui peuvent être reliés de façon coulissante aux ailes (52a) et de manière respective aux deuxièmes pattes (53b) des premiers et deuxièmes éléments de guidage (52, 53) respectivement;
au moins un des premiers éléments de guidage (52) et/ou au moins d'une paire des deuxièmes éléments de guidage (53) étant configurés afin d'avoir des surfaces d'arrêt destinées à définir des positions de limite de butée avant pour la première paire de réceptacles (1, 2).

11. Système selon revendication 10, caractérisé en ce qu'il comporte en outre un dispositif de blocage (66) qui peut être reliés aux bandes (47, 49), en particulier à la bande centrale (47), afin d'empêcher le retrait des réceptacles (1 à 6) des éléments de guidage (52, 53).

12. Système selon l'une quelconque des revendications 1 à 6, caractérisé en ce que les moyens de retenue et de guidage comportent:
au moins un premier et un deuxième groupe de guides (101 à 106) devant être fixés sur le toit (R) dans des directions parallèles respectives, transversalement à l'axe longitudinal du toit (R); et
une multiplicité de paires de dispositifs de retenue (71, 72; 73, 74; 75, 76) devant être fixés dans des positions prédéterminées respectives le long de l'axe longitudinal du toit (R); et en ce que, dans la face respective devant être orientée vers le toit (R), les réceptacles (1 à 6) ont des multiplicités respectives de canaux ou de rainures parallèles (81 à 86) qui peuvent s'engager d'une manière porteuse et coulissante sur les guides (101 à 106) de chaque groupe de guides, et, dans la face respective devant être orientée vers l'axe longitudinal du toit (R), ils comportent un dispositif de blocage et de liaison respectif (97, 98) qui peut être relié à un des dispositifs de retenue (71 à 76).

13. Système selon la revendication 12, caractérisé en ce que les guides (101 à 106) sont fabriqués dans une matière plastique ayant un faible coefficient de friction, en particulier du polytétrafluoroéthylène.

14. Système selon la revendication 12 ou 13, caractérisé en ce que chaque dispositif de retenue comporte un élément accroché (71 à 76), et le dispositif de liaison et de blocage de chaque réceptacle (1 à 6) a un renfoncement (91 à 96) du réceptacle (1 à 6) qui peut recevoir l'élément accroché (71 à 76), et en ce qu'un boulon mobile (97) est monté et peut être actionné de l'extérieur du réceptacle (1 à 6) et peut engager l'élément accroché (71 à 76).

15. Système selon la revendication 14, caractérisé en ce que le boulon (97) est porté par un arbre (98) qui est supporté de façon rotative de manière adjacente à la paroi du réceptacle (1 à 6) faisant face au toit (R) du véhicule à moteur lors de l'utilisation, et qui peut être actionné en rotation à l'aide d'une serrure (110) disposée sur la face latérale du réceptacle (1 à 6) qui, lors de l'utilisation, est tournée vers le côté de carrosserie de véhicule à moteur.
